# EUROPEAN PATENT APPLICATION

(11) **EP 3 933 653 A1**
(43) Date of publication of application: **05.01.2022**
(21) Application number: 20182910.8
(22) Date of filing: 29.06.2020
(51) Int. Cl.: G06F 30/27, G06K 9/00, G06N 20/00, G06F 111/12, G06F 113/14

(54) **METHOD AND SYSTEM FOR GENERATING A DIGITAL REPRESENTATION OF ONE OR MORE ENGINEERING DIAGRAMS IN A COMPUTING ENVIRONMENT**

(71) Applicant: Siemens Aktiengesellschaft, 80333 München (DE)
(72) Inventor: GOPE, Sulagna, 700061 Kolkata, West Bengal (IN); KULKARNI, Srinidhi, 560092 Bangalore, Karnataka (IN); MITTAL, Akash, 560047 Bengaluru, Karnataka (IN)
(74) Representative: Patentanwaltskanzlei WILHELM & BECK

(57) **Abstract**

A method and system for generating digital representation of one or more engineering diagrams in a computing environment 100 is disclosed. The method includes receiving one or more engineering diagrams of a technical installation 106 from one or more data sources. Further, the method includes determining one or more properties associated with one or more components within the engineering diagrams. The method further includes dynamically interlinking each of the determined one or more properties associated with the one or more components within the engineering diagrams. Furthermore, the method includes generating a digital representation model of the engineering diagram using knowledge graph. Also, the method includes outputting the generated digital representation model of the engineering diagram on a user interface of a user device.

## Description

The present invention relates to technical systems and more particularly relates to a method and system for generating digital representation of one or more engineering diagrams in a computing environment.

Piping and Instrumentation diagrams (P & ID) are used by engineers to understand information of available asset or equipment and instrumentation, control philosophy, details of pipes (diameter, standards), location and type of alarms and other preliminary information of the asset such as tags, sizing, process and instrumentation connectivity for a complete plant topology. This understanding helps in planning and modification of plant designs during and after initial build of the plant, plant maintenance, hazardous operability study (HAZOP), and the like. P&IDs are typically created using tools such as computer aided drawing (CAD). However, the P & ID diagrams so created are shared in the form of PDFs or scanned documents. For many legacy plants, the P&IDs are only available as scanned files. The availability of only scanned images or PDFs of P & IDs poses few challenges. These are borne out of the fact that there is no hierarchical digital representation of such P&IDs. The PDFs and scanned images of P & IDs are not CAD engine/machine comprehendible. This means that the information of the components and their interconnections within the P & ID are not stored in a hierarchical data structure. As a result, below mentioned challenges/difficulties are usually encountered.

The foremost challenge is to that currently engineers have to manually go through multiple sheets of P & ID drawings to obtain any information related to the industrial plant. This could lead to errors and omissions. Secondly, the P & ID drawings are usually in incompatible formats. For example, different companies have different P&ID drafting requirements/standards. Even for an experienced engineer in a new company, it takes time to fully understand the nomenclature, drafting techniques and interpret the P & ID drawings. Also, it is almost manually impossible to digitalize the scanned documents of P&ID due to the large volume of such documents and the complexity of the diagrams.

In the light of the above, there is a need for a method and system for generating digital representation of one or more engineering diagrams in a computing environment.

Therefore, it is an object of the present invention to provide a method and system for generating digital representation of one or more engineering diagrams in a computing environment.

The object of the present invention is achieved by a method for generating digital representation of one or more engineering diagrams in a computing environment. The method comprises receiving one or more engineering diagrams of a technical installation from one or more data sources. The one or more engineering diagram comprises one or more components representing the one or more assets (108A-N) and the related information. The one or more engineering diagrams comprises at least one of an electrical wiring diagram, a piping and instrumentation diagram, an engineering design of the technical installation and a floor layout of the technical installation. The engineering diagrams comprises asset design and maintenance information, asset configuration information, asset wiring links or connections, asset physical block information, and the like. In an embodiment, the asset comprises servers, robots, switches, automation devices, programmable logic controllers (PLC)s, human machine interfaces (HMIs), input output modules, motors, valves, pumps, actuators, sensors and other industrial equipment(s).

The method comprises determining one or more properties associated with one or more components within the engineering diagrams. The one or more properties associated with the one or more components comprises component identifier, component type, component configuration parameters, and component communication parameters. The method comprises appropriate interlinking each of the determined one or more properties associated with the one or more components within the engineering diagrams.

The method further comprises generating a digital representation model of the engineering diagram using knowledge graph. The digital representation model of the engineering diagram is generated based on the semantically linked one or more properties associated with the engineering diagram. In an embodiment, the digital representation of the engineering diagram may be a digital twin of the one or more assets. Specifically, the digital representation of the engineering diagram may be a digital twin knowledge graph. Therefore, the digital representation generated may be virtually subdivided into graphs representing, for example, sources or various intermediate representations of a digital twin associated with the one or more asset(s). By keeping track of the digital representations, corresponding asset information, and also the dependencies between the digital representations, only affected parts of the digital representations are rebuilt when corresponding asset information is modified. Therefore, amount of changes (made in runtime) required in case of partial updates to asset information is minimized.

The method further comprises outputting the generated digital representation model of the engineering diagram on a user interface of a user device.

In a preferred embodiment, in determining one or more properties associated with one or more components within the engineering diagram, the method comprises identifying one or more components within the engineering diagram using one or more deep learning based method. Further, the method comprises classifying the one or more identified components within the engineering diagram into one or more component segments based on the type of component and content within the component. Furthermore, the method comprises determining one or more properties associated with each of the one or more components within the engineering diagram based on the classified one or more component segments.

In another preferred embodiment, in dynamically interlinking each of the determined one or more properties associated with the one or more components within the engineering diagram, the method comprises analyzing the one or more properties associated with the one or more components within the engineering diagram. Further, the method comprises identifying a base component among the one or more components to establish connection with the other one or more components based on the type of the components and the respective analyzed one or more properties associated with such component. The method comprises correlating the one or more components of the engineering diagram with the identified base component based on the analyzed one or more properties associated with the one or more components and one or more standard connection rule set prestored in a database as obtained from the extraction pipeline. Furthermore, the method comprises dynamically interlinking each of the determined one or more properties associated with the one or more components based on the correlation between the one or more components with the identified base component.

In another preferred embodiment, in generating the digital representation model of the engineering diagram using knowledge graph, the method comprises generating a hierarchical connection tree of the one or more components within the engineering diagram based on the dynamically interlinked one or more properties associated with the one or more components. Further, the method comprises assigning a position attribute to each of the one more components in the generated hierarchical connection tree based on the position of the one or more components in the received engineering diagram. Furthermore, the method comprises superimposing real time connection status information for each of the one or more components in the generated hierarchical connection tree. Also, the method comprises generating the digital representation model of the engineering diagram based on the superimposed real time connection status information for each of the one more components and based on the generated hierarchical connection tree. The digital representation model of the engineering diagram comprises a knowledge graph view of the one or more components interlinked with each other in a hierarchical manner and comprising the real time connection status information for each of the one or more components.

In another preferred embodiment, in generating the digital representation model of the engineering diagram using knowledge graph, the method comprises validating the dynamically interlinked one or more properties associated with the one or more components based on the pre-stored data table and domain oriented rules.

In yet another preferred embodiment, in outputting the generated digital representation model of the engineering diagram on the user interface of the user device, the method comprises displaying the generated digital representation model of the engineering diagram on the user interface, wherein the generated digital representation model is a knowledge graph.

In yet another preferred embodiment, the method comprises modifying the one or more components within the engineering diagram based on one or more requirements and generating a modified digital representation model for the modified one or more components within the engineering diagram.

In still another preferred embodiment, the method comprises identifying a data format associated with the received industrial wring diagram. Also, the method comprises determining whether the identified data format associated with the received engineering diagram requires a modification. Further, the method comprises converting the received engineering diagram from the identified data format into a compatible format suitable for generating the digital representation model based on the determination.

The object of the present invention is also be achieved by a computing system for generating digital representation of one or more engineering diagrams in a computing environment. The computing system may comprise one or more processors and a memory coupled to the one or more processors. The memory comprises a digital representation management module stored in the form of machine-readable instructions and executable by the one or more processors. The digital representation management module is configured for performing the method described above. The object of the present invention is also achieved by a computing environment. The computing environment comprising a computing system, a technical installation comprising one or more assets capable of communicating asset information associated with the one or more assets to the computing system. The computing environment further comprises at least one user device communicatively coupled to the computing system and the industrial environment via the network.

The object of the present invention is also achieved by a computer-program product having machine-readable instructions stored therein, that when executed by one or more processor(s), cause the one or more processor (s) to perform method steps as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a schematic representation of a computing environment capable of generating digital representations of one or more engineering diagrams, according to an embodiment of the present invention;
- FIG 2: is a block diagram of computing system, such as those shown in FIG 1, in which an embodiment of the present invention can be implemented;
- FIG 3: is a block diagram of digital representation management module, such as those shown in FIG 1 and FIG 2, in which an embodiment of the present invention can be implemented; and
- FIG 4: is a process flowchart illustrating an exemplary method of generating digital representation of one or more engineering diagrams in a computing environment, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

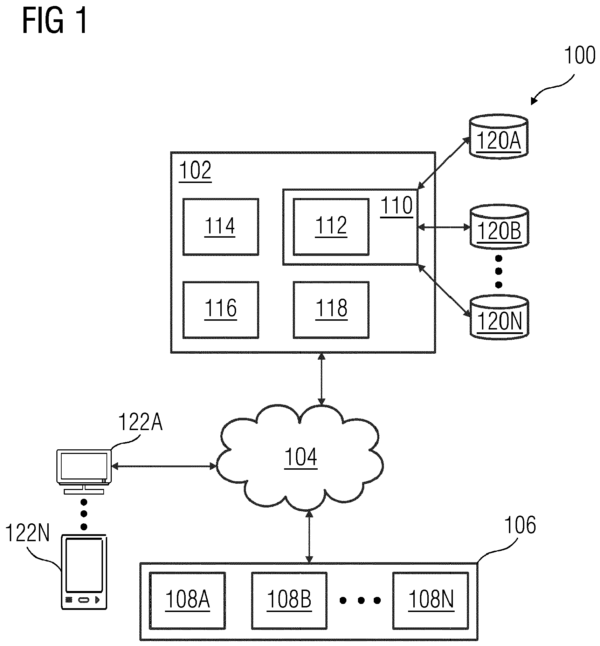

FIG 1 is a schematic representation of a computing environment 100 capable of generating digital representation of one or more engineering diagrams, according to an embodiment of the present invention. Particularly, FIG 1 depicts a computing system 102 which is capable of delivering cloud applications for managing a technical installation 106 comprising one or more asset(s) 108AN. As used herein, "computing environment" refers to a processing environment comprising configurable computing physical and logical resources, for example, networks, servers, storage, applications, services, etc., and data distributed over the cloud platform. The computing environment 100 provides on-demand network access to a shared pool of the configurable computing physical and logical resources.

The computing system 102 is connected to one or more asset(s) 108A-N in the technical installation 106 via a network 104 (e.g., Internet). The one or more asset(s) 108A-N may include servers, robots, switches, automation devices, programmable logic controllers (PLC)s, human machine interfaces (HMIs), input output modules, motors, valves, pumps, actuators, sensors, gas turbines, and other industrial equipment(s). The computing system 102 may be a public cloud, a private cloud, and/or a hybrid cloud configured to provide dedicated cloud services to its users. Although, FIG 1 illustrates the computing system 102 connected to one technical installation 106 via the network 104, one skilled in the art can envision that the computing system 102 can be connected to several technical installation 106 located at different locations via the network 104.

Further, the computing system 102 is also connected to user devices 122A-N via the network 104. The user devices 122A-N can access the computing system 102 for automatically generating digital representations of the one or more engineering diagrams. In an embodiment, the user devices 122A-N comprises an engineering system capable of running an industrial automation application. The user devices 122A-N can be a laptop computer, desktop computer, tablet computer, smartphone and the like. The user devices 122A-N can access applications (such as enabling users to generate digital representations of the one or more engineering diagrams based on user requirement) via a web browser. Further, the users are provided a quick option to download the digital representations from platform 110 to directly into their Simulation Software running in the user devices 122A-N. Further, the user devices 122A-N may install a plug-in for accessing digital representations of one or more engineering diagrams on the computing system 102 via different simulation software running on the user devices 122A-N.

The computing system 102 comprises a platform 110, a digital representation management module 112, a server 114 including hardware resources and an operating system (OS), a network interface 116, one or more structured and unstructured data sources 120A-N and application program interfaces (APIs) 118. The network interface 116 enables communication between the computing system 102, the technical installation 106, and the user device(s) 122A-N. The cloud interface (not shown in FIG 1) may allow the engineers at the one or more user device(s) 122A-N to access digital representations stored at the cloud computing system 102 and perform one or more actions on the digital representations as same instance. The server 114 may include one or more servers on which the OS is installed. The servers 114 may comprise one or more processors, one or more storage devices, such as, memory units, for storing data and machine-readable instructions for example, applications and application programming interfaces (APIs) 118, and other peripherals required for providing cloud computing functionality. The cloud platform 110 is a platform which enables functionalities such as data reception, data processing, data rendering, data communication, etc. using the hardware resources and the OS of the servers 114 and delivers the aforementioned cloud services using the application programming interfaces 118 deployed therein. The cloud platform 110 may comprise a combination of dedicated hardware and software built on top of the hardware and the OS.

The one or more structured and unstructured data sources 120A-N is configured for storing information associated with the one or more assets 108A-N in one or more data format. The one or more structured and unstructured data sources 120A-N is, for example, a structured query language (SQL) data store or a not only SQL (NoSQL) data store like for instance a knowledge graph. The one or more structured and unstructured data sources 120A-N is configured as cloud-based database implemented in the computing environment 100, where computing resources are delivered as a service over the cloud platform 110. The one or more structured and unstructured data sources 120A-N, according to another embodiment of the present invention, is a location on a file system directly accessible by the digital representation management system 112. In another embodiment, the one or more structured and unstructured data sources 120A-N may be external data sources each having different schema and different file formats. The one or more structured and unstructured data sources 120A-N is configured to store asset information, asset parameters, digital representations associated with the asset information, error logs, validation results, abnormalities associated with the asset 122A-N, common data models, sub-data models, behavior trends, and the like. The one or more structured and unstructured data sources 120A-N also maintains versions of the digital representations.

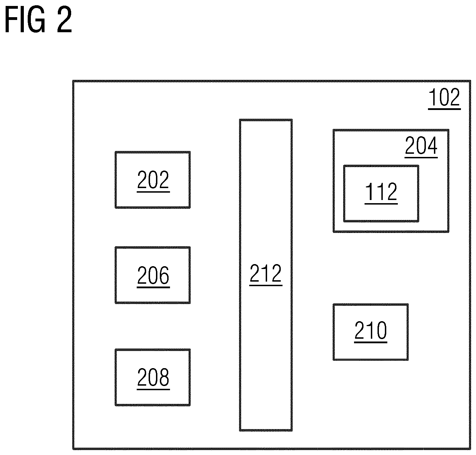

FIG 2 is a block diagram of a cloud computing system 102, such as those shown in FIG 1, in which an embodiment of the present invention can be implemented. In FIG 2, the cloud computing system 102 includes a processor(s) 202, an accessible memory 204, a storage unit 206, a communication interface 208, an input/output unit 210, and a bus 212.

The processor(s) 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processor (s) 202 may also include embedded controllers, such as generic or programmable logic devices or arrays, application specific integrated circuits, single-chip computers, and the like.

The memory 204 may be non-transitory volatile memory and nonvolatile memory. The memory 204 may be coupled for communication with the processor(s) 202, such as being a computer-readable storage medium. The processor(s) 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes a digital representation management module 112 stored in the form of machine-readable instructions on any of the above-mentioned storage media and may be in communication with and executed by the processor(s) 202.

When executed by the processor(s) 202, the digital representation management module 112 causes the processor(s) 202 to generate digital representations of one or more engineering diagrams in a computing environment 100. In an embodiment, the digital representation management module 112 causes the processor(s) 202 to receive one or more engineering diagrams of the technical installation 106 from one or more data sources 120A-N. The one or more engineering diagram comprises one or more components representing the one or more assets (108A-N) and the related information. The one or more engineering diagrams comprises at least one of an electrical wiring diagram, a piping and instrumentation diagram, an engineering design of the technical installation 106 and a floor layout of the technical installation 106.

Further, the digital representation management module 112 causes the processor(s) 202 to determine one or more properties associated with one or more components within the engineering diagrams. The one or more properties associated with the one or more components comprises component identifier, component type, component configuration parameters, and component communication parameters.

In an embodiment, in determining one or more properties associated with one or more components within the engineering diagram, the digital representation management module 112 causes the processor(s) 202 to identify one or more components within the engineering diagram using one or more deep learning based method. Further, the digital representation management module 112 causes the processor(s) 202 to classify the one or more identified components within the engineering diagram into one or more component segments based on the type of component and content within the component. Furthermore, the digital representation management module 112 causes the processor(s) 202 to determine one or more properties associated with each of the one or more components within the engineering diagram based on the classified one or more component segments.

Further, the digital representation management module 112 causes the processor(s) 202 to dynamically interlink each of the determined one or more properties associated with the one or more components within the engineering diagrams. In an embodiment, in dynamically interlinking each of the determined one or more properties associated with the one or more components within the engineering diagram, the digital representation management module 112 causes the processor(s) 202 to analyze the one or more properties associated with the one or more components within the engineering diagram. Further, the digital representation management module 112 causes the processor(s) 202 to identify a base component among the one or more components to establish connection with the other one or more components based on the type of the components and the respective analyzed one or more properties associated with such component. Also, the digital representation management module 112 causes the processor(s) 202 to correlate the one or more components of the engineering diagram with the identified base component based on the analyzed one or more properties associated with the one or more components and one or more standard connection rule set prestored in a database. Furthermore, the digital representation management module 112 causes the processor(s) 202 to dynamically interlink each of the determined one or more properties associated with the one or more components based on the correlation between the one or more components with the identified base component.

Further, the digital representation management module 112 causes the processor(s) 202 to generate a digital representation model of the engineering diagram using knowledge graph. The digital representation model of the engineering diagram is generated based on the semantically linked one or more properties associated with the engineering diagram. In an embodiment, in generating the digital representation model of the engineering diagram using knowledge graph, the digital representation management module 112 causes the processor(s) 202 to generate a hierarchical connection tree of the one or more components within the engineering diagram based on the dynamically interlinked one or more properties associated with the one or more components. Further, the digital representation management module 112 causes the processor(s) 202 to assign a position attribute to each of the one more components in the generated hierarchical connection tree based on the position of the one or more components in the received engineering diagram. Also, the digital representation management module 112 causes the processor(s) 202 to superimpose real time connection status information for each of the one or more components in the generated hierarchical connection tree. Also, the digital representation management module 112 causes the processor(s) 202 to generate the digital representation model of the engineering diagram based on the superimposed real time connection status information for each of the one more components and based on the generated hierarchical connection tree. The digital representation model of the engineering diagram comprises a knowledge graph view of the one or more components dynamically interlinked with each other in a hierarchical manner and comprising the real time connection status information for each of the one or more components.

In another embodiment, in generating the digital representation model of the engineering diagram using knowledge graph, the digital representation management module 112 causes the processor(s) 202 to validate the dynamically interlinked one or more properties associated with the one or more components based on the pre-stored data table.

Furthermore, the digital representation management module 112 causes the processor(s) 202 to output the generated digital representation model of the engineering diagram on a user interface of a user device 122A-N. In an embodiment, in outputting the generated digital representation model of the engineering diagram on the user interface of the user device, the digital representation management module 112 causes the processor(s) 202 to display the generated digital representation model of the engineering diagram on the user interface, wherein the generated digital representation model is a knowledge graph.

Additionally, the digital representation management module 112 causes the processor(s) 202 to modify the one or more components within the engineering diagram based on one or more requirements. The digital representation management module 112 causes the processor(s) 202 to generate a modified digital representation model for the modified one or more components within the engineering diagram.

Moreover, the digital representation management module 112 causes the processor(s) 202 to identify a data format associated with the received engineering diagram. The digital representation management module 112 causes the processor(s) 202 to determine whether the identified data format associated with the received engineering diagram requires a modification. The digital representation management module 112 causes the processor(s) 202 to convert the received engineering diagram from the identified data format into a compatible format suitable for generating the digital representation model based on the determination.

The storage unit 206 is configured for storing the engineering diagrams, and digital representation models.

The communication interface 208 is configured for establishing communication sessions between the one or more user device 122AN and the computing system 102. The communication interface 208 allows the one or more engineering applications running on the user devices 122A-N to import/export digital representations into the computing system 102. In an embodiment, the communication interface 208 interacts with the interface at the user devices 122A-N for allowing the engineers to access the digital representations of the asset information and perform one or more actions on the digital representations stored in the computing system 102.

The input-output unit 210 may include input devices a keypad, touch-sensitive display, camera (such as a camera receiving gesture-based inputs), etc. capable of receiving one or more input signals, such as user commands to process asset data. Also, the input-output unit 210 may be a display unit for displaying a graphical user interface which visualizes the engineering diagram and also displays the status information associated with each set of actions performed on the engineering diagram. The set of actions may include data entry, data modification or data display. The bus 212 acts as interconnect between the processor 202, the memory 204, the storage unit 206 and the input-output unit 210.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of a cloud computing system 102 as is unique to the present disclosure or necessary for an understanding of the present disclosure is depicted and described. The remainder of the construction and operation of the cloud computing system 102 may conform to any of the various current implementation and practices known in the art.

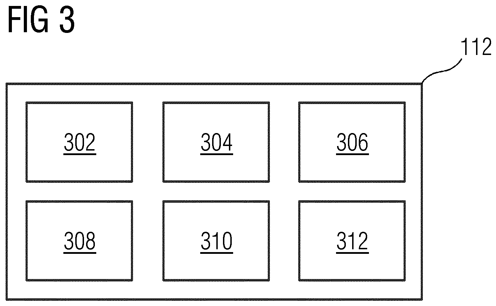

FIG 3 is a block diagram of a digital representation management module 112, such as those shown in FIG 1 and FIG 2, in which an embodiment of the present invention can be implemented. The digital representation management module 112 comprises a data preprocessing module 302, component detection module 304, data correlation module 306, a digital representation generation module 308, a visualization module 310 and a database 312.

The data preprocessing module 302 is configured for receiving one or more engineering diagrams associated with one or more assets 108A-N of a technical installation 106 from one or more data sources 120A-N. The one or more engineering diagram comprises one or more components representing the one or more assets 108A-N and the related information. The one or more assets 108A-N are deployed in the technical installation 106. The engineering diagram comprises at least one of an electrical wiring diagram, a piping and instrumentation diagram, an engineering design of the technical installation 106 and a floor layout of the technical installation 106. For example, in case of electrical schematics diagram, identification of components and their relative connections helps in identification of functional sub-units in a large schematic, which further helps in easy review of schematics. Automatic identification of topology based on the connectivity could also be a first step in knowledge driven design automation, wherein topologies can be mapped to functions. Knowing the requirements, automated check for appropriate and optimized usage of circuit topology is done, using the knowledge graph representation. The quality of the scanned documents is often very poor. In order to ensure the quality of such engineering diagrams or any scanned document received, the data preprocessing module 302 improves the image quality of the engineering diagrams. Standard image preprocessing techniques such as image denoising, smoothing, binarization are performed. One can use a neural network based generative models like generative adversarial networks (GANs) to increase the image resolution for poor quality scanned engineering diagrams.

The component detection module 304 is configured for determining one or more properties associated with one or more components within the engineering diagrams. The one or more properties associated with the one or more components comprises component identifier, component type, component configuration parameters, and component communication parameters. Specifically, the component detection module 304 is configured for identifying one or more components within the engineering diagram using one or more deep learning based method. The one or more components may comprise for example, different mechanical, electrical and control assets 108A-N from the P&IDs. Further, the component detection module 304 is configured for classifying the one or more identified components within the engineering diagram into one or more component segments based on the type of component and content within the component. Also, the component detection module 304 is configured for determining one or more properties associated with each of the one or more components within the engineering diagram based on the classified one or more component segments. The component detection module 304 identifies the different pipes in the diagram and classify them based on visual properties. Deep learning based single shot object segmentation model like Siamese Mask-RCNN, one-shot semantic segmentation or image parser methods are used for symbol segmentation and identification. Piping identification is done using standard computer vision algorithm like probabilistic Hough transform, after appropriate preprocessing is done on the image. Text in the diagram is also detected by this module using pretrained deep neural network models like efficient and accurate scene text detector (EAST), connectionist text proposal network (CTPN), etc. Standard optical character recognition (OCRs) such as Tesseract are used for retrieving the textual information. Additional information about the P&ID, present in the form of notes or tables are processed to extract relevant information about the assets 108A-N, their connections and predefined rules. This component can be easily adapted to other schematics for symbol detection by training it with minimal number of samples.

In an exemplary embodiment, a piping and instrumentation diagram (P&ID diagram) is given as input to the component detection module 304. The component detection module 304 outputs a mask with class label indicating the component type (sensors, valves, pumps, etc.), the pipes and text boxes. The component detection module 304 consists of building blocks such as component or symbol detection, pipe identification and classification, text detection, OCR, verification, and extra sources of information.

In the component or symbol detection block, the P&ID images are given as input and the block outputs a mask class label indicating the component type (sensors, valves, pumps, etc.). Neural network-based segmentation models are used for segmentation and classification of the symbols. Mask-RCNN can be used for segmentation. However, this requires a huge set of annotated examples for training the model. Instead, the following approaches are proposed to get rid of the annotation requirement. Firstly, a few example images of the P & ID diagram are annotated and the rest of the images of the P & ID diagrams are augmented. The annotated images are then analyzed and augmented through simple translation, rotation, and the like. One may divide an image into multiple parts and magnify them along with the masks and use each of the parts as an individual image. Appropriate segmentation models are used like Pyramid pooling network, PSPNet, and the like. Further, a single shot learning approach is used to tackle this problem of symbol recognition using minimal annotated data such as for example, Siamese Mask-RCNN, one-shot semantic segmentation or image parser.

In order to use the component detection module 304 on other types of engineering diagrams, the component detection module 304 is trained on such samples belonging to that domain. The advantage lies in the fact that the model training or finetuning are one by using only a small set of annotated images of the respective engineering diagram.

In the pipe identification and classification block, the P&ID image are pre-processed by appropriate binarization of the P & ID image annotated as described above. Gaussian blurring and appropriate preprocessing comprising of dilation and erode can be performed on the P & ID images. Denoising of P & ID images is also required and methods like kernel smoothing may be used to get rid of those P & ID diagrams having noise. Probabilistic Hough transform is done on the processed image to detect edges. Once the edges are obtained, the output image is center cropped to get rid of the boundary edges and other extra text present in the diagram. It is to be noted that a P&ID generally consists of different types of pipes (solid, dotted, dashed, etc.). In order to classify them, small kernels on top of the lines detected are used. A set of rules are used for dotted lines, dashed lines, and the like using kernel. For example, predefine a kernel size, if there is a single gap inside the kernel and two lines, one entering and other leaving the rectangular kernel, then this can be considered a dashed line. The above approach is based on handcrafted features and traditional computer vision algorithm. Since this method does not involve any sort of model training, it is used on any schematic diagram for edge detection. Another approach to solve the problem, is to use an end-to-end convolutional network that can detect and classify the different types of pipes. Use of spatial convolutional architecture for is proposed this purpose. This method needs a huge number of annotated example P & ID images for training the convolutional model.

Further, the text detection block detects the text present in the P & ID diagram and outputs a location (bounding box) around the text. For text detection, neural network models such as the EAST, CTPN, and the like are used. A pretrained model is used directly, eliminating the need of annotating images.

In OCR block, different textual information is present in the diagram. Such textual information is present inside the symbols, above pipes (for pipe related information), as general notes. The text boxes (from text detector) and the components (from component identifier) are then extracted from the P&ID diagram. Image binarization on the text boxes are processed to remove noise and get a clear text. OCRs such as Tesseract or Calamari are used on the processed boxes of text within the P & ID diagram for retrieving the relevant textual information from the P & ID diagram.

In verification block, in order to ensure that the components within the P & ID diagram are classified correctly, a further verification step is performed with the help of OCR. For example, generally tag for a particular type of component follows a particular format. Thus, if there is an incompatibility between symbol class and tags, this is captured automatically. Furthermore, design rules are used for verification of symbols detected.

In extra sources of information block, a separate OCR engine is used to scan the information present in additional documents (if any). This information is present in form of running text, tables, charts, and the like. Information related to the P&ID are extracted from this text using different information retrieval techniques and the corresponding data is associated with the components in the knowledge graph.

It is to be noted that, in order to run the pipeline on schematics other than P&ID, only the component detection module 304 requires retraining and adaptation to the domain. The rest of the pipeline can be used as it is. The requirements for running the pipeline on other schematics remains the same as that of the P&ID diagram.

The data correlation module 306 is configured for dynamically interlinking each of the determined one or more properties associated with the one or more components within the engineering diagrams. Specifically, the data correlation module 306 is configured for analyzing the one or more properties associated with the one or more components within the engineering diagram. Further, the data correlation module 306 is configured for identifying a base component among the one or more components to establish connection with the other one or more components based on the type of the components and the respective analyzed one or more properties associated with such component. Also, the data correlation module 306 is configured for correlating the one or more components of the engineering diagram with the identified base component based on the analyzed one or more properties associated with the one or more components and one or more standard connection rule set prestored in a database. Also, the data correlation module 306 is configured for dynamically interlinking each of the determined one or more properties associated with the one or more components based on the correlation between the one or more components with the identified base component.

The data correlation module 306 is configured to consolidate the output from the component detection module 304. The output of this module is used to build the final graph structure. The component detection module 304 detects the components, pipes, text separately. The data correlation module 306 is used to integrate and connect all these detected components. Geometrical properties of the components are used to establish the connections between the components. Additionally, some handcrafted rules based on domain knowledge are used to validate the correlations. This module consolidates the output from the component detection module 304, to create a final graph structure. This module comprises of the following. First, components such as pipes are associated with each other. Once the symbol detection and the piping identification is done, an intersection of the symbols and pipes are to be found to gather the connectivity information. This intersection can be found simply by using the coordinates of the mask (polygon) and the coordinates of the edges as generated by the object detection and edge detection pipelines respectively. This may result in a lot of false detections. This can be further validated using the other subsidiary information and domain knowledge (e.g. two particular components can never be connected directly, etc.). Secondly, the components such as texts are associated with the pipes. In the proposed pipeline, text is detected as a bunding box around the text. The center point of the bounding box is determined and the Euclidean distance of the center point with all the edges detected are determined. Later, the text box is assigned to the closest pipeline. This is however not the sole criteria for the association task. Also, an OCR is performed on the text box to read the text. The text gives some information as to whether it is a piping information or description of a component. This is to avoid any confusion regarding whether the text is belonging to pipe or components. Thirdly, additional information from subsidiary docs are associated with the components in the diagram. Generally, there is a lot of additional information associated with a P&ID. This information is provided as additional notes or tables along with the P&ID schematic. Using an OCR, the text is retrieved from the additional documents and associate them with the respective component in the P&ID diagram. For example, properties of a pressure transmitter mentioned in the component list table is associated with the respective pressure transmitter in the schematic using the tag information.

The digital representation generation module 308 is configured for generating a digital representation model of the engineering diagram using knowledge graph. The digital representation model of the engineering diagram is generated based on the dynamically linked one or more properties associated with the engineering diagram. The digital representation model of the engineering diagram is highly useful for distributed processing and inferencing. Specifically, the digital representation generation module 308 is configured for generating a hierarchical connection tree of the one or more components within the engineering diagram based on the dynamically interlinked one or more properties associated with the one or more components. The digital representation generation module 308 is configured for assigning a position attribute to each of the one more components in the generated hierarchical connection tree based on the position of the one or more components in the received engineering diagram. Further, the digital representation generation module 308 is configured for superimposing real time connection status information for each of the one or more components in the generated hierarchical connection tree. Also, the digital representation generation module 308 is configured for generating the digital representation model of the engineering diagram based on the superimposed real time connection status information for each of the one more components and based on the generated hierarchical connection tree. The digital representation model of the engineering diagram comprises a knowledge graph view of the one or more components dynamically interlinked with each other in a hierarchical manner and comprising the real time connection status information for each of the one or more components.

Further, the digital representation generation module 308 is configured for validating the dynamically interlinked one or more properties associated with the one or more components based on the pre-stored data table. In an exemplary embodiment, the digital representation of the engineering diagram is a knowledge graph based model virtually representing the connections between one or more physical asset, such as assets 108A-N deployed in the technical installation 106.

Furthermore, the digital representation generation module 308 is configured for modifying the one or more components within the engineering diagram based on one or more requirements. Also, the digital representation generation module 308 is configured for generating a modified digital representation model for the modified one or more components within the engineering diagram. Also, the digital representation generation module 308 is configured for identifying a data format associated with the received industrial wring diagram. Also, the digital representation generation module 308 is configured for determining whether the identified data format associated with the received engineering diagram requires a modification. Furthermore, the digital representation generation module 308 is configured for converting the received engineering diagram from the identified data format into a compatible format suitable for generating the digital representation model based on the determination.

The digital representation generation module 308 constructs a knowledge graph out of the information obtained from the above steps. The components and pipes are represented as entities in the knowledge graph and their physical connections are represented as edges. Apart from the components, there are other entities representing the class of components, functions, and the like. In the knowledge graph and the components are connected to these entities by appropriate relations. The entities have attributes, which contain associated texts (as obtained from the association module), extra information about components, and the like. For example, the identified assets 108A-N are also linked to other data sources such as asset datasheets for any further investigation. The RDF representation helps to store the data in a hierarchical fashion and draw inference automatically from the graph.

Typically, once the symbol and piping identification is done, a graph is constructed. Knowledge graphs (generally RDF graphs), are used, where the entities and their relationship with other entities are stored in form of triples. In our case, entities generally represent the components or assets 108A-N (mechanical/electrical) in the P&ID diagram. The entities are connected by relations like "connected to" (if there is a physical link between the two assets 108A-N in the diagram), "belong to class", and the like. For example, a control valve has some of the following relations and attributes in the Knowledge graph such as connected to "Valve" by the relation "belongs to class", connected to "Pressure Transmitter" by a relation "connected to (physical link in diagram)", has attribute "tag/label", "functionality", and the like. Multiple relations are defined based on requirements and these relations are dynamically added or modified. The knowledge graph (KG) is the preferred way of representation of data, this is due to the fact that the information is stored in a structured manner, preserving meaningful compositional and conceptual hierarchies. This form of representation helps in drawing inferences easily, querying and performing different analysis to get a better insight into the topology and the control logic. For other schematic diagrams, the KG representation may be modified correspondingly (e.g. attributes and properties of a few entities may change). The graph may also be stored as a property graph, where each component and pipes are represented as nodes and the physical connectivity among them is indicated by an edge in the graph (no concept of triples) . Any graph database may be used for storing the property graph.

Furthermore, the digital representation generation module 308 integrates each of the individual P&IDs into a single P&ID diagram. The inlet and outlet cues from each of the P&ID diagrams are used for merging and generating a single knowledge graph for a full technical installation 106 topology.

Furthermore, the digital representation generation module 308 links P&ID sheets back to the knowledge graph. For example, while generating the graph, information about each component's position are maintained in the original P&ID sheet. This is achieved by adding a position attribute to each entity in the knowledge graph, which specifies the drawing page in which the particular component is present and the exact coordinates of the component as obtained from the segmentation mask. This feature adds an additional functionality to the user interface. If required a user can click on a particular node in the knowledge graph and the corresponding component gets highlighted in the original P&ID sheet. The knowledge graph is further analyzed to draw inference and answer user queries automatically.

The visualization module 310 is configured for outputting the generated digital representation model of the engineering diagram on a user interface of a user device 122A-N. The visualization module 310 is configured for displaying the generated digital representation model of the engineering diagram on the user interface. The generated digital representation model is a knowledge graph. The visualization module 310 is an interactive framework for the user to query the topology, draw automated inference from the P&ID, identify design patterns and understand the design and control logic in an interactive fashion.

The visualization module 310 provides a user interface which contains a dashboard that displays the P&ID diagram in form of a knowledge graph as generated above. The interface allows the user to query into the graph. High-level information about the P&ID diagram such as bill of materials (BOM), assemblies, critical assemblies, and the like are provided on the knowledge graph. Appropriate processing is done on the graph to give a better insight into the P&ID topology. The components/symbols are represented as nodes with proper labels and color codes within the knowledge graphs. Edges represent connectivity between the components. This is derived from the RDF graph stored in the backend. Since the graph also stores all the auxiliary information about each of the assets 108A-N and pipes, access to all such details are derived by clicking on the corresponding node in the graph. User will no longer have to search for appropriate documents to get this required auxiliary information. Also, the visualization module 310 provides a full view of the technical installation design in one place. He can also choose to have a custom view of a subpart of the full design. The visualization module 310 enables the user to query the graph for aggregate information, for example, how many pressure transmitters are present in the whole plant, how all the sensors are connected to each other and the like. Then, the visualization module 310 automatically generates and displays bill of material (BOM) information from the graphical representation. Further, the visualization module 310 enables the user to query into the graph and get inference about the design topology. This is generated in an autonomous fashion by processing the P&I graph. The user interface also provides an additional feature of linking the P&ID sheet to the graph. For example, user may click on a node and the corresponding component in the appropriate P&ID sheet gets highlighted.

The database 312 is configured for storing the generated representation of the engineering diagrams in a predefined file format. The predefined file format is compatible with a format used by the plurality of user devices 122A-N.

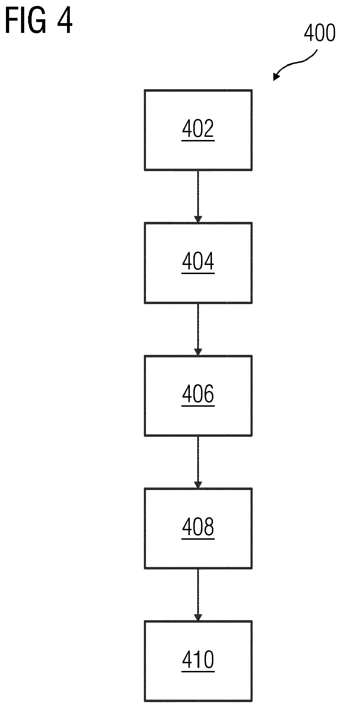

FIG 4 is a process flowchart illustrating an exemplary method 400 of generating digital representations of engineering diagrams in a computing environment 100, according to an embodiment of the present invention. At step 402, one or more engineering diagrams of a technical installation 106 is received from one or more data sources 120A-N. The one or more engineering diagram comprises one or more components representing the one or more assets (108A-N) and the related information. The one or more assets 108A-N are deployed in the technical installation 106. The one or more engineering diagrams comprises at least one of an electrical wiring diagram, a piping and instrumentation diagram, an engineering design of the technical installation 106 and a floor layout of the technical installation 106. At step 404, one or more properties associated with one or more components within the engineering diagrams are determined. The one or more properties associated with the one or more components comprises component identifier, component type, component configuration parameters, and component communication parameters. At step 406, each of the determined one or more properties associated with the one or more components within the engineering diagrams are dynamically interlinked. At step 408, a digital representation model of the engineering diagram is generated using knowledge graph. The digital representation model of the engineering diagram is generated based on the dynamically linked one or more properties associated with the engineering diagram. At step 410, the generated digital representation model of the engineering diagram is outputted on a user interface of a user device 122AN.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### List of reference numbers

100- computing environment
102- computing system
104-network
106-industrial environment
108A-N-one or more assets
110- platform
112- digital representation management module
114-server
116-network interface
118- application program interfaces (APIs)
120A-N- one or more data sources
122A-N-plurality of user devices
202- processor(s)
204-an accessible memory
206-a storage unit 206
208-communication interface
210-an input/output unit
212-a bus.
302-data preprocessing module
304- component detection module
306- data correlation module
308- digital representation generation module
310-a visualization module
312-database

## Claims

1. A method for generating digital representations of one or more engineering diagrams in a computing environment (100), the method comprising:
receiving, by a processor (202), one or more engineering diagrams associated with one or more assets (108A-N) installed in a technical installation (106) from one or more data sources (120A-N), wherein the one or more engineering diagram comprises one or more components representing the one or more assets (108A-N) and the related information;
determining, by the processor (202), one or more properties associated with the one or more components within the engineering diagrams;
dynamically, by the processor (202), interlinking each of the determined one or more properties associated with the one or more components within the engineering diagrams;
generating, by the processor (202), a digital representation model of the engineering diagram using knowledge graph, wherein the digital representation model of the engineering diagram is generated based on the dynamically linked one or more properties associated with the engineering diagram; and
outputting, by the processor (202), the generated digital representation model of the engineering diagram on a user interface of a user device (122A-N).

2. The method according to claim 1, wherein the one or more engineering diagrams comprises at least one of an electrical wiring diagram, a piping and instrumentation diagram, an engineering design of the technical installation (106) and a floor layout of the technical installation (106).

3. The method according to any of the preceding claims, wherein determining one or more properties associated with one or more components within the engineering diagram comprises:
identifying one or more components within the engineering diagram using one or more deep learning based method;
classifying the one or more identified components within the engineering diagram into one or more component segments based on the type of component and content within the component; and
determining one or more properties associated with each of the one or more components within the engineering diagram based on the classified one or more component segments.

4. The method according to any of the preceding claims, wherein dynamically interlinking each of the determined one or more properties associated with the one or more components within the engineering diagram comprises:
analyzing the one or more properties associated with the one or more components within the engineering diagram;
identifying a base component among the one or more components to establish connection with the other one or more components based on the type of the components and the respective analyzed one or more properties associated with such component;
correlating the one or more components of the engineering diagram with the identified base component based on the analyzed one or more properties associated with the one or more components and one or more standard connection rule set prestored in a database; and
dynamically interlinking each of the determined one or more properties associated with the one or more components based on the correlation between the one or more components with the identified base component.

5. The method according to any of the preceding claims, wherein generating the digital representation model of the engineering diagram using knowledge graph comprises:
generating a hierarchical connection tree of the one or more components within the engineering diagram based on the dynamically interlinked one or more properties associated with the one or more components;
assigning a position attribute to each of the one more components in the generated hierarchical connection tree based on the position of the one or more components in the received engineering diagram;
superimposing real time connection status information for each of the one or more components in the generated hierarchical connection tree; and
generating the digital representation model of the engineering diagram based on the superimposed real time connection status information for each of the one more components and based on the generated hierarchical connection tree.

6. The method according to any of the preceding claims, wherein the digital representation model of the engineering diagram comprises a knowledge graph view of the one or more components dynamically interlinked with each other in a hierarchical manner and comprising the real time connection status information for each of the one or more components.

7. The method according to any of the preceding claims, wherein generating the digital representation model of the engineering diagram using knowledge graph comprises:
validating the dynamically interlinked one or more properties associated with the one or more components based on the pre-stored data table.

8. The method according to any of the preceding claims, wherein outputting the generated digital representation model of the engineering diagram on the user interface of the user device comprises:
displaying the generated digital representation model of the engineering diagram on the user interface, wherein the generated digital representation model is a knowledge graph.

9. The method according to any of the preceding claims, further comprising:
modifying the one or more components within the engineering diagram based on one or more requirements; and
generating a modified digital representation model for the modified one or more components within the engineering diagram.

10. The method according to any of the preceding claims, further comprising:
identifying a data format associated with the received industrial wring diagram;
determining whether the identified data format associated with the received engineering diagram requires a modification; and
converting the received engineering diagram from the identified data format into a compatible format suitable for generating the digital representation model based on the determination.

11. The method according to any of the preceding claims, wherein the one or more properties associated with the one or more components comprises component identifier, component type, component configuration parameters, and component communication parameters.

12. A computing system (102) comprising:
one or more processor(s) (202); and
a memory (204) coupled to the one or more processor (s) (202), wherein the memory (204) comprises model management module (112) stored in the form of machine-readable instructions executable by the one or more processor(s) (202), wherein the model management module (112) is capable of performing a method according to any of the claims 1-10.

13. A computing environment (100) comprising:
a computing system (102) according to claim 11;
a technical installation (106) comprising one or more components (108A-N) capable of communicating component data to the computing system (102); and
at least one user device (122A-N) communicatively coupled to the computing system (102) and the technical installation (106) via the network (104).

14. A computer program product comprising machine-readable instructions stored therein that, when executed by one or more processors (202), cause the one or more processor (202) to perform a method according to any of the claims 1-10.
